# DEMANDE DE BREVET EUROPEEN

(11) **EP 2 433 884 A1**
(43) Date de publication de la demande: **28.03.2012**
(21) Numéro de dépôt: 11182995.8
(22) Date de dépôt: 27.09.2011
(51) Int. Cl.: B65G 43/00, B65G 47/84, B67C 7/00

(54) **Dispositif de sécurité destiné à détecter un mauvais positionnement d'un article en entrée d'un carrousel.**

(30) Priorité: 28.09.2010 FR 1057826
(71) Demandeur: Ermi 77, 77370 Nangis (FR)
(72) Inventeur: Rocchetti, Xavier, 77120 Mauperthuis (FR)
(74) Mandataire: Pontet, Bernard

(57) **Abrégé**

La présente invention concerne un dispositif de sécurité (100) destiné à détecter un mauvais positionnement d'un article en entrée d'un carrousel présentant plusieurs logements périphériques pour recevoir des articles.

Le dispositif de sécurité comprend :
- une rampe périphérique (7) pour conduire et maintenir dans les logements périphériques les articles sortant d'un dispositif de déplacement acheminant les articles vers le carrousel,
- des moyens (27) pour permettre une déviation de la rampe périphérique (7) sous l'effet d'une sollicitation de la part d'au moins un article disposé dans une position défectueuse, et
- des moyens de détection (23) de cette déviation.

## Description

### Domaine technique

La présente invention concerne le domaine des dispositifs de sécurité destiné à détecter un mauvais positionnement d'un article en entrée d'un carrousel.

Le domaine de l'invention est plus particulièrement mais de manière non limitative celui des dispositifs de sécurité pour détecter un mauvais positionnement d'un article à l'entrée d'une installation de contrôle de la qualité d'une succession d'articles en verre, dans laquelle un carrousel amène des articles successivement à différents postes de contrôle situés sur la périphérie du carrousel.

### Etat de la technique antérieure

On connaît dans l'art antérieur des installations de contrôle pour effectuer de façon automatisée plusieurs contrôles sur un même type d'article, en particulier une bouteille en verre. Les articles sont introduits un à un dans des logements périphériques d'un carrousel de l'installation de contrôle, passent par différents postes de contrôle, puis sortent de l'installation.

De telles installations peuvent comprendre une vis sans fin qui achemine les articles vers l'installation. Une rampe d'introduction maintient les articles dans l'intérieur d'un filetage de la vis sans fin. Lorsqu'une bouteille arrive couchée, elle est poussée entre la vis sans fin et la rampe d'introduction.

La bouteille est poussée notamment par l'ensemble des bouteilles qu'elle précède dans l'installation. Les forces exercées sur un article mal positionné dans l'installation (dans le carrousel ou dans un dispositif de déplacement amenant les articles jusqu'au carrousel), par les articles qui le suivent, sont suffisantes pour briser un article par exemple en verre.

La bouteille étant couchée, elle ne rentre pas à l'intérieur du filetage de la vis sans fin. Elle tend donc à pousser la rampe d'introduction. Selon l'art antérieur, la rampe d'introduction peut être translatée parallèle à elle-même pour l'éloigner de la vis sans fin, sous l'effet de la sollicitation due à la bouteille couchée. On peut alors détecter cette translation de la rampe d'introduction pour déclencher un signal de sécurité. Le signal de sécurité provoque l'arrêt de l'installation et donc du défilement des articles, avant que la bouteille couchée n'entre dans le carrousel. On évite ainsi que la bouteille couchée, du fait de son mauvais positionnement, se brise contre le carrousel. Une bouteille qui se brise dans le carrousel provoque des dégâts considérables (notamment sur les matériels variables qui sont les éléments interchangeables : vis sans fin, roue du carrousel, etc). On économise donc plusieurs heures d'arrêt de l'installation pour nettoyer les débris de bouteilles et remettre l'installation en état de fonctionnement. On gagne ainsi en heures de production.

Un article mal engagé dans le logement d'entrée du carrousel peut aussi se briser à l'intérieur de l'installation. Les débris de verre peuvent endommager l'installation, endommager les autres articles, blesser des opérateurs humains. Il faut donc arrêter le fonctionnement de l'installation durant plusieurs heure pour nettoyer ces débris, et le cas échéant réparer les dégâts provoqués sur l'installation. Cela augmente considérablement les coûts de production.

Un inconvénient des dispositifs selon l'art antérieur est que l'on ne détecte pas un mauvais positionnement de l'article qui interviendrait lors du passage de l'article de la vis sans fin à un logement d'entrée du carrousel.

Un mauvais positionnement de l'article peut être tel qu'il exerce alors une force dans une direction telle que la composante de cette force selon le seul degré de liberté de la rampe d'introduction est insuffisante pour translater cette rampe d'introduction. Le signal de sécurité n'est pas déclenché, alors que l'article est mal positionné.

Un inconvénient des dispositifs de sécurité selon l'art antérieur, destinés à détecter un mauvais positionnement d'un article dans un carrousel, est qu'ils présentent un taux d'erreur important en ne permettant pas de détecter dans de nombreux cas qu'un article est mal positionné et peut donc se briser dans l'installation.

L'un des buts de l'invention est donc de proposer un dispositif de sécurité destiné à détecter un mauvais positionnement d'un article à l'entrée d'un carrousel, et ne présentant pas au moins l'un des inconvénients précités.

### Exposé de l'invention

Cet objectif est atteint avec un dispositif de sécurité destiné à détecter un mauvais positionnement d'un article en entrée d'un carrousel présentant plusieurs logements périphériques pour recevoir des articles. Le dispositif de sécurité comprend :
- une rampe périphérique pour conduire et maintenir dans les logements périphériques les articles sortant d'un dispositif de déplacement acheminant les articles vers le carrousel,
- des moyens pour permettre une déviation de la rampe périphérique sous l'effet d'une sollicitation de la part d'au moins un article disposé dans une position défectueuse, et
- des moyens de détection de cette déviation.

On peut alors détecter un mauvais positionnement d'un article, ce mauvais positionnement intervenant notamment lors du passage d'un article depuis le dispositif de déplacement jusqu'à un logement périphérique d'entrée du carrousel.

Les moyens de détection peuvent comprendre un élément parmi :
- des moyens de détection optiques ;
- des moyens de détection électriques.

Les moyens de détection peuvent comprendre des moyens de détection pneumatiques.

Avantageusement, le dispositif de sécurité est agencé comme un pendule rigide, les moyens de détection se trouvant sur un point fixe du pendule et un ensemble rigide qui comprend la rampe périphérique formant le corps oscillant du pendule.

On pourra définir un pendule comme un corps oscillant relié à un point fixe autour duquel, le corps oscillant pouvant tourner autour du point fixe selon un arc de cercle centré sur le point fixe.

Une sollicitation de la part d'au moins un article disposé dans une position défectueuse s'effectue au niveau de la rampe de déviation qui est sur le corps oscillant du pendule.

Quelle que soit la direction de la force exercée par l'article sur la rampe de déviation, l'ensemble rigide peut être dévié par rapport au point fixe du pendule.

Les moyens de détection peuvent donc détecter une déviation de la rampe périphérique quelle que soit la direction de la force exercée par l'article sur la rampe de déviation.

Le point fixe du pendule se trouve de préférence surélevé par rapport à la rampe périphérique.

On peut ainsi obtenir, du fait de la distance entre le corps oscillant du pendule et son point fixe où sont agencés les moyens de détection d'une déviation, une grande sensibilité du dispositif de sécurité.

Une très faible déviation, quelle qu'elle soit, peut induire un couple permettant de détecter cette déviation au niveau des moyens de détection de cette déviation.

Le dispositif de sécurité selon l'invention peut en outre comprendre une rampe d'introduction pour maintenir des articles à l'intérieur d'évidements d'un dispositif de déplacement acheminant les articles vers le carrousel, la rampe d'introduction pouvant former un ensemble rigide avec la rampe périphérique.

Le dispositif de sécurité selon l'invention peut comprendre en outre des moyens de réglage de position pour régler la position d'une première des rampes, une deuxième des rampes étant déplaçable par rapport à la première rampe, des moyens de guidage de la deuxième rampe étant adaptés à commander le déplacement relatif de la deuxième rampe par rapport à la première rampe, sous l'influence des moyens de réglage de position de la première rampe.

On réalise ainsi un mouvement relatif maîtrisé entre le déplacement de la première rampe et le déplacement de la deuxième rampe.

Il y a une relation prédéterminée notamment par les moyens de guidage entre le mouvement de la première rampe et celui de la deuxième rampe.

On obtient ainsi un réglage unique pour les deux rampes.

Le réglage est fin et précis pour les deux rampes.

La première rampe peut être la rampe d'introduction et la deuxième rampe la rampe périphérique.

Les moyens de réglage de position peuvent comprendre :
- une position de verrouillage dans laquelle la rampe d'introduction forme un ensemble rigide avec la rampe périphérique (la rampe d'introduction et la rampe périphérique sont fixes l'une par rapport à l'autre), et
- une position active (ou de réglage) dans laquelle on peut régler la position de la première rampe.

Le dispositif de conduite d'articles selon l'invention peut comprendre un support relié à la rampe d'introduction par une liaison pivot, la rampe périphérique étant fixée à ce support.

La rampe d'introduction et la rampe périphériques peuvent être reliées ensemble dans la zone de liaison.

La zone de liaison peut être située du côté du carrousel, pour la rampe d'introduction, et du côté de la rampe d'introduction, pour le support.

La direction longitudinale de la rampe d'introduction peut être sensiblement perpendiculaire à la direction longitudinale du support.

La direction longitudinale de la rampe d'introduction peut varier par rapport à la direction longitudinale du support.

La rampe périphérique peut être en forme d'arc de cercle autour du carrousel.

On peut définir un point médian sur l'arc de cercle. Les moyens de guidage peuvent mettre en oeuvre un déplacement de la rampe périphérique de façon qu'une tangente à l'arc de cercle en ce point médian soit perpendiculaire au rayon du carrousel passant par le point médian.

La rampe périphérique peut être mobile entre deux positions extrêmes, définissant deux rayons de cercles passant par l'axe de rotation du carrousel et par un point médian sur la rampe périphérique. Le rayon de l'arc de cercle est la moyenne desdits deux rayons de cercle.

Les moyens de réglage de position peuvent comprendre une crémaillère déplaçant en translation la rampe d'introduction, de façon qu'elle reste parallèle à elle-même.

De préférence, la crémaillère est reliée à la rampe d'introduction dans la zone de liaison de la rampe d'introduction avec le support, la crémaillère formant un angle compris entre 10° et 80° avec la rampe d'introduction.

De préférence, cet angle est compris entre 40° et 60°, par exemple 45°.

L'axe de la crémaillère peut être sensiblement la bissectrice d'un angle entre la direction longitudinale de la rampe d'introduction et la direction longitudinale du support.

Les moyens de guidage selon l'invention peuvent comprendre une pièce de liaison, la rampe périphérique étant coulissante par rapport à cette pièce de liaison.

La pièce de liaison peut être guidée en translation par rapport au carrousel, suivant une direction sensiblement radiale par rapport au carrousel (correspondant à un rayon du carrousel).

La pièce de liaison peut être guidée en translation selon un axe formant un angle non nul avec l'axe de la crémaillère. Cet angle est par exemple compris entre 20° et 70°, par exemple entre 50° et 60°, en particulier 45°.

La rampe périphérique peut être guidée notamment en translation par rapport au carrousel, suivant une direction sensiblement radiale par rapport au carrousel (correspondant à un rayon du carrousel).

Avantageusement, la rampe d'introduction est mobile entre une position en avant et une position en retrait, et l'extrémité côté carrousel de la rampe d'introduction est alors respectivement mobile entre une position éloignée et proche de la pièce de liaison.

Des moyens de compensation peuvent relier la pièce de liaison et la rampe périphérique, de façon que l'angle formé entre la rampe périphérique et la rampe d'introduction puisse varier.

Les moyens de compensation peuvent comprendre au moins une lumière (ou ouverture) traversant la pièce de liaison et dans laquelle se déplace au moins un coulisseau solidaire de la rampe périphérique.

Le coulisseau peut être en particulier monté sur le support.

Le coulisseau peut être constitué de deux axes perpendiculaires au plan défini par la rampe d'introduction et le support, et distants l'un de l'autre.

Le coulisseau peut être constitué de deux axes verticaux et distants l'un de l'autre.

Le coulisseau peut être constitué de deux colonnes perpendiculaires au plan défini par la rampe d'introduction et le support, et distantes l'une de l'autre.

Le coulisseau peut comprendre une pièce en forme de haricot coulissant dans la lumière (ou ouverture).

La lumière (ou ouverture) peut être en forme d'arc de cercle.

La lumière (ou ouverture) peut être en forme d'arc de cercle centré sur l'axe de rotation du carrousel.

La rampe périphérique peut être guidée notamment en rotation par rapport au carrousel, suivant un arc de cercle centré sur l'axe de rotation du carrousel.

Le support peut comprendre une deuxième rampe périphérique.

### Description des figures et modes de réalisation

D'autres avantages et particularités de l'invention apparaîtront à la lecture de la description détaillée de mises en oeuvre et de modes de réalisation nullement limitatifs, et des dessins annexés suivants :
- la figure 1 illustre en vue de dessus une première installation comprenant un dispositif de sécurité selon l'invention,
- la figure 2 illustre en vue de dessus une deuxième installation comprenant un dispositif de sécurité selon l'invention,
- la figure 3 illustre une vue de devant en perspective la deuxième installation comprenant un dispositif de sécurité selon l'invention,
- la figure 4 illustre une vue de l'arrière en perspective d'un dispositif de sécurité selon l'invention,
- la figure 5 illustre une autre vue de l'arrière en perspective du dispositif de sécurité selon l'invention,
- la figure 6 illustre une vue de côté du dispositif de sécurité selon l'invention,
- la figure 7 illustre une autre vue de côté du dispositif de sécurité selon l'invention,
- la figure 8 illustre de façon schématique un mode de réalisation d'un dispositif de conduite selon l'invention,
- la figure 9 illustre de façon schématique un autre mode de réalisation d'un dispositif de conduite selon l'invention, et
- la figure 10 illustre de façon schématique un dispositif de sécurité selon l'invention.

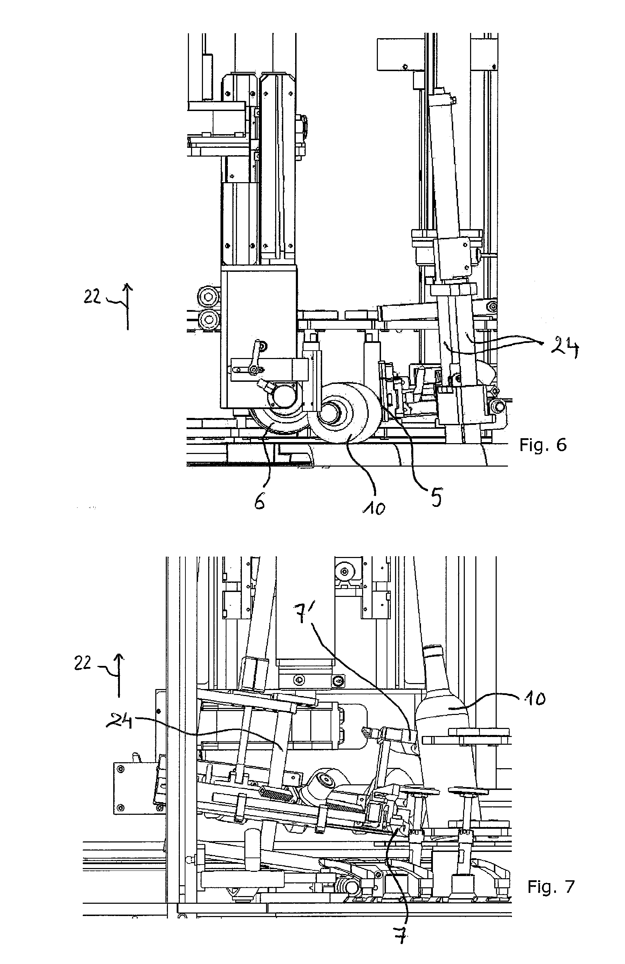

On va tout d'abord décrire un dispositif de sécurité 100, représenté en particulier à la figure 7.

Le dispositif de sécurité 100 peut être utilisé une installation 2.

Une telle installation 2 peut être une installation de contrôle permettant d'effectuer de façon automatisée plusieurs contrôles sur un même type d'article 10, en particulier une bouteille en verre.

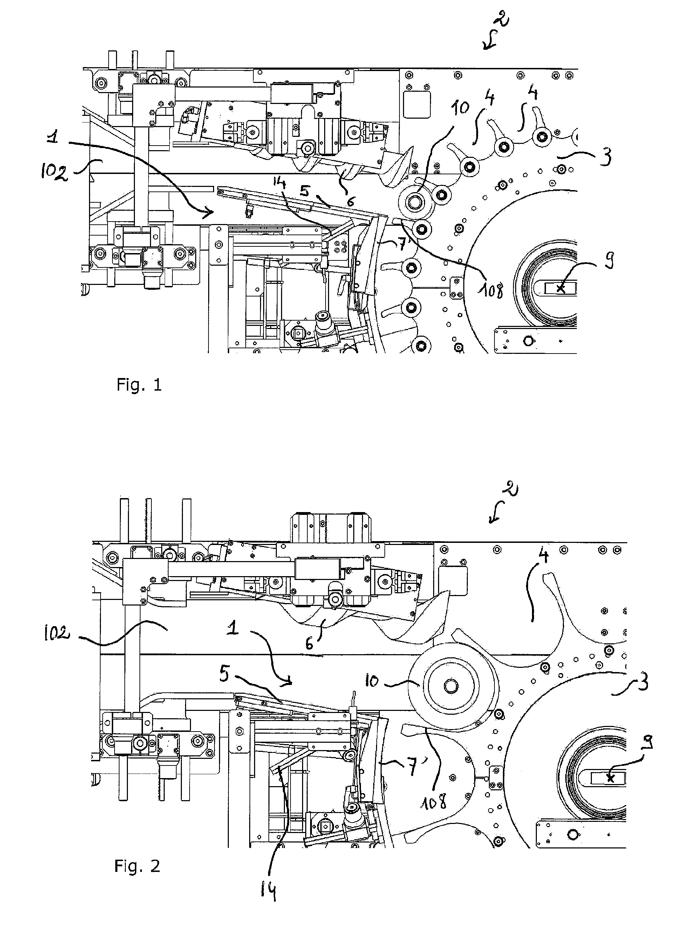

L'installation 2 comprend un carrousel rotatif 3 présentant sur sa périphérie des logements périphériques 4 (voir en particulier les figures 1 et 2).

Les articles 10 sont introduits un à un dans un logement périphérique 4.

A l'entrée du carrousel 3, au-dessus d'un bord latéral d'un tapis roulant 102, se trouve une vis sans fin 6 qui sert à amener les articles 10 depuis le tapis roulant 102 jusqu'à un logement périphérique 4 du carrousel 3. La vis sans fin 6 est orientée horizontalement, sensiblement vers l'axe de rotation du carrousel 3, et donc obliquement par rapport à la direction de déplacement du tapis roulant 102.

La rotation de la vis sans fin 6 amène un à un les articles 10 à un La rotation de la vis sans fin 6 amène un à un les articles 10 à un logement périphérique (ou alvéole) 4 du carrousel 3 (on peut parler d'un logement d'entrée du carrousel).

Les articles successifs poussés par le tapis roulant 102 se logent chacun dans un creux d'un filetage de la vis sans fin 6. Le pas de la vis sans fin 6 doit être adapté au diamètre des articles qui vont être contrôlés dans l'installation 2.

Soit une coupe de la vis sans fin 6, passant par son axe de rotation, un creux du filetage est défini comme une partie d'épaisseur réduite le long de l'axe longitudinal de la coupe.

On peut prévoir un unique article 10 par creux du filetage de la vis sans fin 6.

La rotation du carrousel 3 entraîne les articles 10 successivement vers différents postes, par exemple des poste de contrôle (notamment contrôle de diamètres d'un goulot de bouteille, contrôle des glaçures sur la bouteille, contrôle de planéité d'un goulot de bouteille, etc), puis les articles 10 sont évacués hors de l'installation 2.

Un article 10 entre dans un logement périphérique 4 arrêté momentanément à la sortie de la vis sans fin.

Ce logement périphérique 4 est en forme d'anneau ouvert. L'anneau ouvert présente un bord intérieur du côté opposé à la vis sans fin 6 dont la tangente est parallèle à l'axe de rotation de la vis sans fin 6.

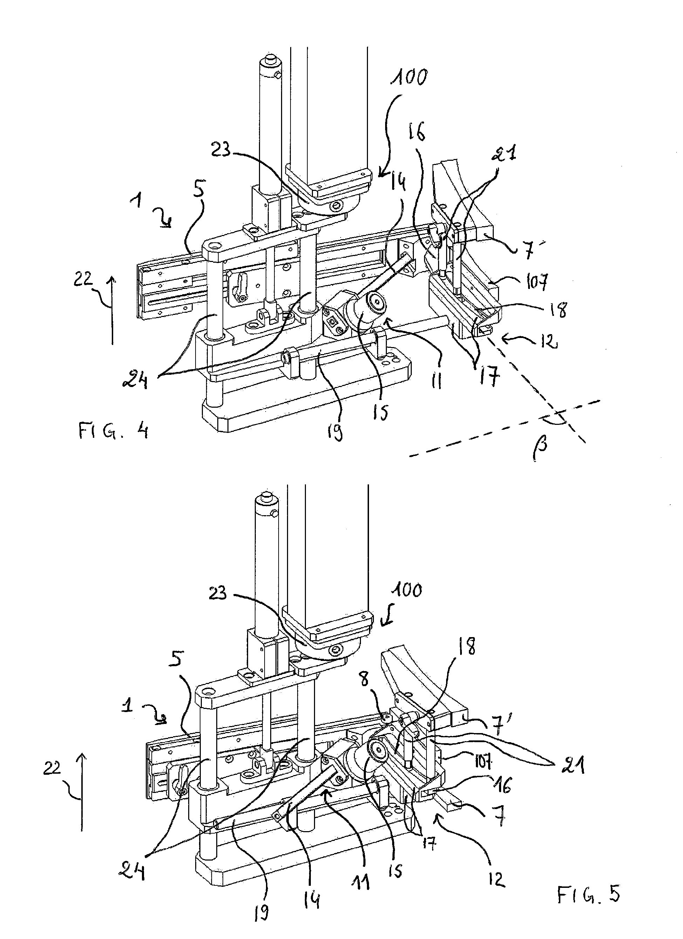

Le dispositif de sécurité 100 comprend une rampe périphérique 7 (voir notamment figure 5).

La rampe périphérique 7 permet de guider les articles 10 depuis la vis sans fin 6 vers un logement périphérique 4.

Le dispositif de sécurité 100 selon l'invention permet de détecter un mauvais positionnement d'un article dans le carrousel 3 et à l'entrée de ce carrousel 3.

Le dispositif de sécurité 100 selon l'invention comprend des moyens pour permettre une déviation de la rampe périphérique 7 sous l'effet d'une sollicitation de la part d'au moins un article disposé dans une position défectueuse.

Ce cas est représenté à la figure 7. L'article 10 est mal engagé dans le logement périphérique 4.

La rampe périphérique 7 est positionnée à une telle distance de la périphérie du carrousel 3 que l'article 10 mal engagé dans le logement périphérique exerce une force sur la rampe périphérique.

La rampe périphérique 7 est déviée sous l'effet de cette force.

Des moyens de détection 23 détectent la déviation de la rampe périphérique 7 et déclenchent un signal sécurité lorsque la déviation mesurée dépasse un seuil prédéterminé, par exemple pour une déviation non nulle.

Le signal de sécurité arrête le fonctionnement de l'installation 2.

L'arrêt de l'installation 2 est instantané.

On évite ainsi que l'article 10 mal engagé dans le logement périphérique 4 ne se brise dans l'installation 2.

On ne perd pas des heures de production à nettoyer les débris d'article.

On ne détériore pas l'installation, notamment la vis sans fin 6, le carrousel 3, etc.

Dans les exemples représentés, les moyens de détection 23 consistent en des moyens de détection pneumatiques.

On peut citer à titre d'exemple un module d'arrêt d'urgence du commerce commercialisé par la société Destaco ®.

Le dispositif de sécurité 100 selon l'invention est agencé comme un pendule rigide.

En contrebas se trouve la rampe périphérique 7.

En haut se trouvent les moyens de détection 23.

Les moyens de détection 23 se trouvent sur un point fixe du pendule, en hauteur.

Les moyens de détection 23 comprennent une cavité 2 fixe présentant une ouverture 26.

En l'absence de toute déviation de la rampe périphérique 7, l'ouverture 26 est fermée par une plaque 27 amovible.

La rampe périphérique 7 est reliée de façon rigide aux premières extrémités respectives de deux colonnes 24. (On peut prévoir une seule colonne 24. On prévoit de préférence au moins deux colonnes 24.)

On peut régler la hauteur de la rampe périphérique 7 le long des colonnes 24.

Les colonnes 24 sont reliées à leurs autres extrémités respectives aux moyens de détection 23.

La plaque 27 est solidaire de la rampe périphérique 7 par l'intermédiaire notamment des colonnes 24.

Les moyens pour permettre une déviation de l'ensemble rigide sous l'effet d'une sollicitation de la part d'au moins un article disposé dans une position défectueuse sont constitués par la plaque 27 qui est mobile dans la cavité 25. Si la plaque 27 ne pouvait pas bouger dans la cavité 25 elle-même fixe, il n'y aurait pas de déviation de l'ensemble rigide (ici formé en particulier par la rampe périphérique).

La pression dans la cavité 25 est réglée par un débit d'air comprimé.

Un détecteur de débit en sortie de la source d'air comprimé (non représentée) permet de détecter une augmentation du débit d'air comprimé engendrée par une fuite dans la cavité 25.

La plaque 27 peut être maintenue en place à la fois sous l'effet de la gravité et sous l'effet de ressorts dans la cavité 25.

Une déviation de la rampe périphérique 7 provoque une déviation de la plaque 27.

La déviation de la plaque 27 provoque une fuite de pression par l'ouverture 26.

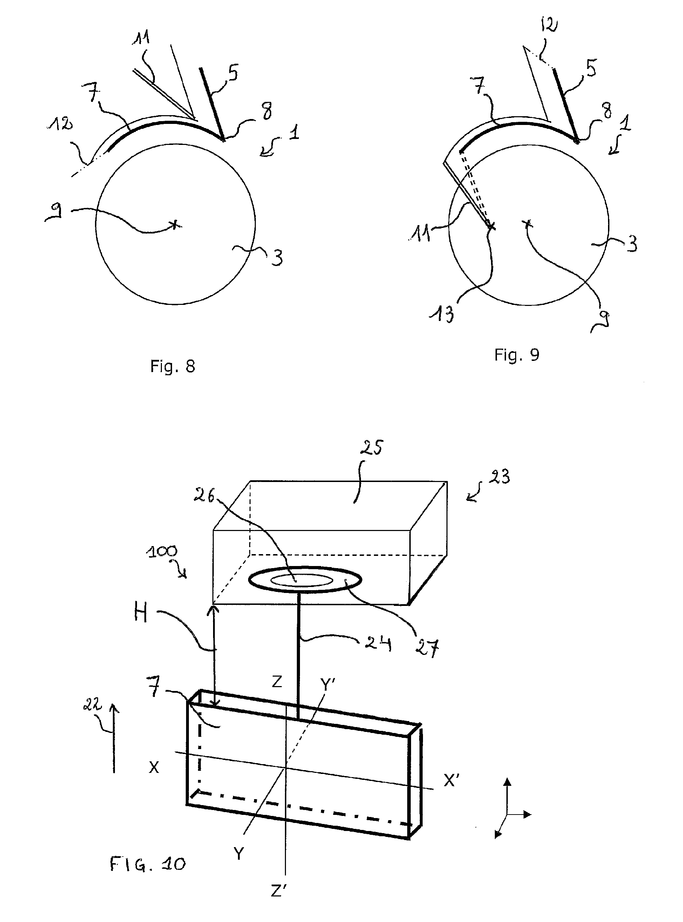

On voit à la figure 10 que n'importe quel mouvement de la rampe périphérique induit une perte de pression au sein de la cavité 25 présentant une ouverture 26.

Le dispositif de sécurité 100 est dit multidirectionnel.

Une rotation de la rampe périphérique 7 autour de l'axe YY' soulève la plaque 27 ce qui provoque une fuite de pression par l'ouverture 26, dans la cavité 25, que l'on détecte par les moyens de détection 23.

Une rotation de la rampe périphérique 7 autour de l'axe XX' soulève la plaque 27 ce qui provoque une fuite de pression par l'ouverture 26, dans la cavité 25, que l'on détecte par les moyens de détection 23.

Une rotation de la rampe périphérique 7 autour de l'axe ZZ' induit un couple du à la fois à la hauteur H entre les moyens de détection 23 et la rampe périphérique 7, et au poids de l'ensemble porté par la plaque 27. Ce couple provoque une fuite de pression par l'ouverture 26, dans la cavité 25, que l'on détecte par les moyens de détection 23.

La plaque 27 porte notamment la rampe périphérique 7.

On peut régler la sensibilité du dispositif de sécurité 100 en réglant la pression à l'intérieure de la cavité 25.

Plus la pression à l'intérieur de la cavité 25 est élevée, plus la force nécessaire pour soulever la plaque 27 est importante.

Plus la force nécessaire pour soulever la plaque 27 est importante, plus la force contre la rampe périphérique 7 pour provoquer l'arrêt de l'installation 2 est importante.

On peut prévoir le même type de dispositif de sécurité 100 pour détecter un mauvais positionnement d'un article à l'entrée du carrousel 3, par exemple pour arrêter le fonctionnement de l'installation 2 si une bouteille arrive couchée dans la vis sans fin 6.

Ce mode de réalisation est représenté en particulier à la figure 6.

Le dispositif de sécurité 100 peut comprendre en outre une rampe d'introduction 5.

La rampe d'introduction 5 permet de maintenir les articles 10 dans les creux du filetage de la vis sans fin 6.

On voit à la figure 6 un article 10 couché alors qu'il est prévu pour arriver debout et se loger dans un filetage de la vis sans fin 6.

La rampe d'introduction 5 est positionnée à une telle distance de la vis sans fin 6 que l'article 10 mal engagé exerce une force sur la rampe d'introduction 5.

La rampe d'introduction 5 est reliée de façon rigide aux premières extrémités respectives de deux colonnes.

On peut régler la hauteur de la rampe d'introduction 5 le long des colonnes.

Les colonnes sont reliées à leurs autres extrémités respectives aux moyens de détection 23.

Comme vu ci-avant, n'importe quel mouvement de la rampe d'introduction 5 induit une perte de pression au sein de la cavité 25 présentant une ouverture 26.

Selon un mode de réalisation privilégié, la rampe périphérique 7 et la rampe d'introduction 5 font partie d'un même ensemble rigide (lorsque les moyens de réglage 11 sont dans une position verrouillée, c'est-à-dire fixes l'une par rapport à l'autre).

Cet ensemble rigide est relié à des moyens de détection 23 uniques.

Si l'on reprend la description concernant les figures 6 et 7, cet ensemble rigide comprend la rampe périphérique 7 reliée rigidement aux premières extrémités respectives des deux colonnes 24, et la rampe d'introduction reliée rigidement aux premières extrémités respectives des deux colonnes 24.

Les deux colonnes 24 sont reliées à leurs autres extrémités respectives aux moyens de détection 23 uniques.

La plaque 27 porte tout l'ensemble rigide.

La plaque 27 peut être déplacée sous l'effet d'une déviation de la rampe périphérique 7.

La plaque 27 peut être déplacée sous l'effet d'une déviation de la rampe d'introduction 5.

Ainsi, un unique dispositif de sécurité 100 permet de déclencher un signal d'alerte provoqué :
- par un mauvais positionnement d'un article 10 dans un dispositif de déplacement (ici la vis sans fin 6), acheminant les article vers le carrousel 3, et/ou
- dans un logement périphérique 4 du carrousel 3.

On va maintenant décrire un mode de réalisation de l'invention comprenant :
- une rampe d'introduction 5, la rampe d'introduction 5 pouvant former un ensemble rigide avec la rampe périphérique 7,
- des moyens de réglage de position 11 pour régler la position d'une première des rampes, une deuxième des rampes étant déplaçable par rapport à la première rampe, et
- des moyens de guidage 12 de la deuxième rampe étant adaptés à commander le déplacement relatif de la deuxième rampe par rapport à la première rampe, sous l'influence des moyens de réglage de position 11.

On appelle dispositif de conduite 1 l'ensemble formé par la rampe d'introduction, la rampe périphérique, les moyens de réglage de position 11 et les moyens de guidage 12.

On souhaite adapter l'installation 2 à différents types d'articles, notamment des articles de différents diamètres (par exemple :
- des bouteilles à base cylindrique d'un diamètre par exemple de 16mm, ou 80mm, ou 180mm, etc
- des bouteilles à base carré, héxagonale ou toute autre forme)

On souhaite adapter l'installation 2 à différentes tailles de carrousel, par exemple des carrousels de rayons 270mm, 320mm, 380mm, etc.

Pour cela, on peut ajuster le carrousel de façon à ce que les logements périphériques présentent une dimension adaptée.

La figure 2 présente un deuxième mode de réalisation d'installation comprenant un dispositif de sécurité selon l'invention, se différentiant du mode de réalisation de la figure 1 simplement par le diamètre des articles 10 auxquels elle est adaptée.

On ajuste aussi le pas de la vis sans fin 6, de façon que les creux du filetage de la vis sans fin 6 soient adaptés aux dimensions des articles.

Le dispositif de conduite nécessite lui aussi d'être adapté.

Il faut ajuster la distance entre l'axe de rotation de la vis sans fin 6, et la rampe d'introduction 5.

Il faut aussi ajuster la distance entre le logement périphérique 4 dans lequel un article est introduit à la sortie de la vis sans fin 6, et la rampe périphérique 7.

L'idée consiste à :
- contrôler le déplacement de l'une première des rampes parmi la rampe périphérique 7 et la rampe d'introduction 5, et
- prévoir des moyens de guidage pour maîtriser un déplacement de l'autre rampe, entraînée par la première rampe.

La distance entre l'axe de rotation de la vis sans fin 6, et la rampe d'introduction 5 est ajustée par translation de la rampe d'introduction 5 de façon qu'elle reste parallèle à elle-même et à l'axe de rotation de la vis sans fin 6.

L'extrémité de la rampe d'introduction 5, côté carrousel 3, tourne dans un premier sens autour du carrousel 3 en se rapprochant du carrousel 3.

L'extrémité de la rampe d'introduction 5, côté carrousel 3, tourne dans l'autre sens autour du carrousel 3 en s'éloignant du carrousel 3.

La rampe d'introduction 5 et la rampe périphérique 7 sont reliées l'une à l'autre par une articulation 8, en particulier une liaison pivot.

La rampe périphérique 7 est en forme d'arc de cercle centré sur l'axe de rotation 9 du carrousel 3.

La rampe périphérique 7 doit rester tangente au carrousel 3.

L'arc de cercle tourne dans ledit premier sens autour du carrousel 3 en se rapprochant du carrousel 3, tout restant sensiblement centré sur l'axe de rotation du carrousel 3.

On définit deux positions extrêmes de la rampe périphérique 7 : une position éloignée du carrousel 3 et une position rapprochée du carrousel 3.

A la position éloignée correspond un rayon maximum d'un cercle centré sur l'axe de rotation 9 du carrousel 3 et passant par un point donné de la rampe périphérique 7 en position éloignée.

A la position rapprochée correspond un rayon minimum d'un cercle centré sur l'axe de rotation 9 du carrousel 3 et passant par un point donné de la rampe périphérique 7 en position éloignée.

La rampe périphérique 7 est en forme d'arc de cercle centré sur l'axe de rotation 9 du carrousel 3, le rayon de cet arc de cercle étant compris entre ledit rayon maximum et ledit rayon minimum.

Le rayon de cet arc de cercle est égal à la moyenne entre ledit rayon maximum et ledit rayon minimum.

L'arc de cercle tourne dans ledit autre sens autour du carrousel 3 en s'éloignant du carrousel 3, tout restant sensiblement centré sur l'axe de rotation du carrousel 3.

L'extrémité de la rampe périphérique 7 côté vis sans fin 6, et l'extrémité de la rampe d'introduction 5 côté carrousel 3, restent jointives de façon à guider au mieux un article depuis la vis sans fin 6 vers un logement périphérique 4.

La figure 8 présente un mode de réalisation de dispositif de conduite 1 selon l'invention.

La rampe d'introduction 5 (en trait fin pour une position éloignée, et en trait épais pour une position rapprochée) est déplacée par des moyens de réglage de position 11, par exemple une crémaillère.

La rampe périphérique 7 (en trait fin pour une position éloignée, et en trait épais pour une position rapprochée) est entraînée en mouvement par le déplacement de la rampe d'introduction.

Son mouvement est contrôlé d'une part par la liaison pivot 8, et d'autre part par les moyens de guidage 12 (en trait fin alterné).

Les moyens de guidage 12 peuvent consister en une conduite recevant un pion solidaire de la rampe périphérique 7.

La figure 9 présente un autre mode de réalisation de dispositif de conduite 1 selon l'invention.

La rampe périphérique 7 (en trait fin pour une position éloignée, et en trait épais pour une position rapprochée) est déplacée par des moyens de réglage de position 11, par exemple un axe (représentés dans deux positions respectivement en traits continus et en pointillés) en rotation autour d'un point fixe 13 et auquel est fixée la rampe périphérique 7.

La rampe d'introduction 5 (en trait fin pour une position éloignée, et en trait épais pour une position rapprochée) est entraînée en mouvement par le déplacement de la rampe d'introduction.

Son mouvement est contrôlé d'une part par la liaison pivot 8, et d'autre part par les moyens de guidage 12 (en trait fin alterné).

Les moyens de guidage 12 peuvent consister en une conduite recevant un pion solidaire de la rampe périphérique 7.

On peut imaginer de nombreuses variantes à ces modes de réalisation.

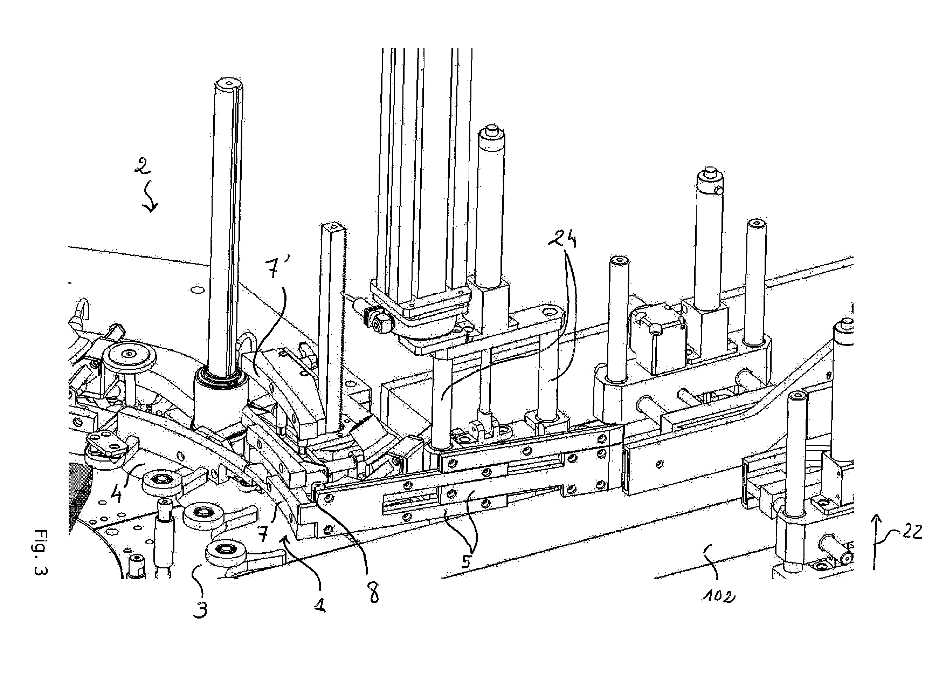

On va maintenant décrire plus en détail un mode de réalisation particulier d'un dispositif de conduite 1, visible en particulier aux figures 1, 2, 3, 4 et 5.

La rampe d'introduction 5 est reliée à des moyens de réglage de position 11 consistant en une crémaillère.

L'angle entre la rampe d'introduction 5 et une tige 14 de la crémaillère est compris entre 20° et 60°, par exemple 45°.

La tige 14 de la crémaillère est reliée à l'extrémité côté carrousel 3 de la rampe d'introduction 5.

La crémaillère est située à l'extérieur du carrousel 3.

La tige 14 est située entre la rampe d'introduction 5 et la rampe périphérique 7.

La tige 14 de la crémaillère peut être déplacée en tournant une molette de réglage 15.

La molette de réglage 15 peut être tournée à la main entre différentes positions prédéterminées, de préférence définies par des crans.

On peut aussi régler la position de la molette de réglage 15 par lecture de graduations.

La molette de réglage 15 est solidaire d'un pignon qui engrène avec la tige 14.

Dans un mode de réalisation privilégié, la molette de réglage comprend :
- une position de verrouillage dans laquelle la rampe d'introduction 5 forme un ensemble rigide avec la rampe périphérique 7, et
- une position active ou de réglage, dans laquelle on peut régler la position de la rampe d'introduction 5.

Un système de verrouillage permet de maintenir en position la molette de réglage 15. On désactive le verrouillage de la rotation de la molette de réglage 15 par une pression sur le dessus de la molette de réglage 15, ou encore en la tirant vers soi.

Dans un mode de réalisation particulier, l'angle de rotation entre deux crans de la molette de réglage 15 correspond à 3mm de déplacement de la tige 14.

On réalise ainsi le déplacement de la rampe d'introduction 5 par rapport à la vis sans fin 6.

La rampe périphérique 7 est solidaire d'un support 16.

Le support 16 présente en outre une deuxième rampe périphérique 7' au-dessus du plan formé par la rampe d'introduction 5 et la rampe périphérique 7.

Le support 16 a une forme allongée suivant une direction sensiblement perpendiculaire à un rayon du carrousel 3.

Le support 16 a une forme allongée suivant une direction sensiblement tangentielle au carrousel 3.

Le support 16 a une forme allongée suivant une direction sensiblement perpendiculaire à la rampe d'introduction 5.

Le support 16 est relié à la rampe d'introduction 5 par une liaison pivot 8.

L'angle entre l'axe longitudinal de la rampe d'introduction 5 et l'axe longitudinal de la rampe périphérique 7 peut donc varier.

Le support 16 est réalisé en bronze.

La liaison pivot 8 est située côté carrousel 3, pour la rampe d'introduction 5, et côté rampe d'introduction 5, pour la rampe périphérique 7.

Les moyens de guidage comprennent une pièce de liaison 17.

La rampe périphérique coulisse par rapport à la pièce de liaison 17.

La pièce de liaison 17 est guidée en translation selon un rayon du carrousel 3.

Une rampe 107 est fixée à la pièce de liaison 17.

La pièce de liaison 17 est guidée en translation en étant reliée à une barre 19 coulissant à travers deux anneaux alignés selon l'axe de translation souhaité.

La barre 19 est perpendiculaire à la direction longitudinale de la pièce de liaison 17.

La pièce de liaison 17 comprend des moyens de compensation 18 consistant en une ouverture ou lumière.

L'ouverture 18 a une forme allongée.

L'ouverture 18 a une forme en haricot.

La forme de l'ouverture permet que l'angle formé entre l'axe longitudinal de la rampe périphérique 7 et l'axe longitudinal de la rampe d'introduction 5 puisse varier.

L'ouverture 18 est en forme d'arc de cercle centré sur l'axe de rotation 9 du carrousel 3.

Le support 16 comprend deux tiges 21 qui traversent l'ouverture 18. Les deux tiges 21 peuvent être translatée dans l'ouverture 18.

Les deux tiges 21 coulissent dans l'ouverture 18.

Les deux tiges 21 sont distantes l'une de l'autre.

Les deux tiges 21 ne sont pas translatée selon l'axe vertical 22.

Le déplacement de la rampe périphérique 7, entraîné par la rampe d'introduction 5, est donc guidé d'une part par la pièce de liaison 17 qui fixe une direction de translation et d'autre part par l'ouverture 18 qui fixe un trajet autour du carrousel 3.

Les figures 4 et 5 présentent deux vues du dispositif de conduite 1 selon l'invention, dans deux positions différentes.

La figure 4 correspond à une position « en avant » du dispositif de conduite 1 selon l'invention.

La figure 5 correspond à une position « en retrait » du dispositif de conduite 1 selon l'invention.

Entre la figure 4 et la figure 5, les différences sont les suivantes :
- la rampe d'introduction 5 est plus proche du carrousel 3 (non représenté) et de la vis sans fin 6 (non représentée) à la figure 4 qu'à la figure 5 ;
- la rampe périphérique 7 est plus proche du carrousel 3 (non représenté) et de la vis sans fin 6 (non représentée) à la figure 4 qu'à la figure 5 ;
- la pièce de liaison 17 est plus proche de l'axe de rotation 9 du carrousel 3 à la figure 4 qu'à la figure 5 ;
- la rampe périphérique 7 est décalée par rapport à la pièce de liaison 17 entre la figure 4 et la figure 5 ;
- l'axe longitudinal du support 16 a tourné par rapport à l'axe longitudinal de la pièce de liaison 17, entre la figure 4 et la figure 5
- l'angle β entre l'axe longitudinal du support 16 et la perpendiculaire à l'axe longitudinal de la pièce de liaison 17 est modifié, entre la figure 4 et la figure 5.
- l'angle entre l'axe longitudinal de la rampe d'introduction 5 et l'axe longitudinal du support 16 a varié, entre la figure 4 et la figure 5.

Lorsque les moyens de réglage de position 11 sont dans un état verrouillé, la rampe d'introduction 5 et la rampe périphérique 7 forment ensemble un ensemble rigide.

On réalise ainsi un dispositif de conduite 1 permettant de régler la rampe d'introduction 5 et la rampe périphérique 7 avec un unique réglage.

Le réglage ne nécessite aucun outil.

On peut effectuer un réglage pour passer d'un type d'article à un autre.

On peut effectuer un réglage fin pour adapter finement les positions des rampes d'introduction 5 et périphérique 7 par rapport à une installation 2 donnée et un type d'article 10 donné.

Un article est guidé dès sa sortie de la vis sans fin 6, quel que soit le calibre de cet article.

Bien sûr, l'invention n'est pas limitée aux exemples qui viennent d'être décrits et de nombreux aménagements peuvent être apportés à ces exemples sans sortir du cadre de l'invention.

## Revendications

1. Dispositif de sécurité (100) destiné à détecter un mauvais positionnement d'un article (10) en entrée d'un carrousel (3) présentant plusieurs logements périphériques (4) pour recevoir des articles (10), **caractérisé en ce qu'**il comprend :
- une rampe périphérique (7) pour conduire et maintenir dans les logements périphériques (4) les articles (10) sortant d'un dispositif de déplacement (6) acheminant les articles (10) vers le carrousel (3),
- des moyens (27) pour permettre une déviation de la rampe périphérique (7) sous l'effet d'une sollicitation de la part d'au moins un article (10) disposé dans une position défectueuse, et
- des moyens de détection (23) de cette déviation.

2. Dispositif de sécurité (100) selon la revendication 1, **caractérisé en ce que** les moyens de détection (23) comprennent un élément parmi :
- des moyens de détection optiques ;
- des moyens de détection électriques.

3. Dispositif de sécurité (100) selon la revendication 1, **caractérisé en ce que** les moyens de détection (23) comprennent des moyens de détection pneumatiques.

4. Dispositif de sécurité (100) selon la revendication 3, **caractérisé en ce qu'**il est agencé comme un pendule rigide, les moyens de détection (23) se trouvant sur un point fixe du pendule et un ensemble rigide qui comprend la rampe périphérique (7) formant le corps oscillant du pendule.

5. Dispositif de sécurité (100) selon la revendication 4, **caractérisé en ce que** le point fixe du pendule se trouve surélevé par rapport à la rampe périphérique (7).

6. Dispositif de sécurité (100) selon l'une quelconque de revendications 1 à 5, **caractérisé en ce qu'**il comprend en outre une rampe d'introduction (5) pour maintenir des articles (10) à l'intérieur d'évidements du dispositif de déplacement (6) acheminant les articles (10) vers le carrousel (3), la rampe d'introduction (5) pouvant former un ensemble rigide avec la rampe périphérique (7).

7. Dispositif de sécurité (100) selon la revendication 6, **caractérisé en ce qu'**il comprend en outre des moyens de réglage de position (11) pour régler la position d'une première des rampes (5 ; 7), et **en ce qu'**une deuxième des rampes (7 ; 5) est déplaçable par rapport à la première rampe (5 ; 7), des moyens de guidage (12) de la deuxième rampe (7 ; 5) étant adaptés à commander le déplacement relatif de la deuxième rampe (7 ; 5) par rapport à la première rampe (5 ; 7), sous l'influence des moyens de réglage de position (11) de la première rampe (5 ; 7).

8. Dispositif de sécurité (100) selon la revendication 7, **caractérisé en ce que** les moyens de réglage de position comprennent :
- une position de verrouillage dans laquelle la rampe d'introduction (5) forme un ensemble rigide avec la rampe périphérique (7), et
- une position active dans laquelle on peut régler la position de la première rampe (5 ; 7).
